# EUROPEAN PATENT APPLICATION

(11) **EP 4 667 776 A1**
(43) Date of publication of application: **24.12.2025**
(21) Application number: 24182677.5
(22) Date of filing: 17.06.2024
(51) Int. Cl.: F16G 11/05, F16G 11/04, F16G 11/02

(54) **ROPE END TERMINATION**

(71) Applicant: Aritec Holding AG, 6014 Luzern (CH)
(72) Inventor: HUANG, Pierre, 6014 Luzern (CH)
(74) Representative: Keller Schneider Patent- und Markenanwälte AG

(57) **Abstract**

A rope termination, in particular for a rope (400) with several strands, comprising a mandrel (100) for coaxial insertion into an end section of the rope (400), whereby a spreading of the end section of the rope (400) can be achieved with the mandrel (100); and a chuck (200) for inserting the end section of the rope (400) comprising the mandrel (100), the end section of the rope (400) being frictionally held between the mandrel (100) and the chuck (200) in the assembled state. In a method for terminating an end section of a rope (400) using a rope termination according to one of claims 1 to 9 and an end section of a rope (400), characterised in that the end section of the rope (400) is positioned in the chuck (200) and the mandrel (100) is positioned coaxially in the end section of the rope (400).

## Description

### Technical Field

The invention relates to a rope termination, in particular for a rope with several strands, comprising a chuck for inserting the end section of the rope, the end section of the rope being frictionally held by the chuck in the assembled state. The invention further relates to a method for terminating an end section of a rope using a rope termination.

### Background Art

Rope terminals are essential components used to finish the ends of ropes, providing a secure and efficient way to attach ropes to various connectors, such as hooks, rings, or other anchoring devices. The process of terminating rope ends is critical in many applications, including cranes, logistics such as rack handling, deep sea applications, lifts, construction, climbing, and rescue operations. Proper rope termination ensures safety, reliability, and durability of the rope assembly. Many types of rope terminals are known in the art.

Bonding and coating techniques involves applying a heat shrink tubing over the rope end and heated to shrink it tightly, securing the fibers together. This method is commonly used for synthetic ropes. Further, adhesive coating includes dipping the end of the rope within an adhesive material that hardens, preventing fraying and adding strength.

Crimping or sleeving techniques involves placing a sleeve (also known as a ferrule) over the end of the rope and then compressing the sleeve using a swaging tool or screws to form a permanent bond. This method is often used for wire ropes and some synthetic ropes.

Splicing technique involves weaving the end of the rope back into itself to form a loop. It is commonly used for natural and synthetic ropes and provides a strong and secure termination.

Often, a metal or plastic fitting is placed inside a loop (eye) of the rope to prevent abrasion and maintain the shape of the loop. The fitting is usually used with splicing or swaged fittings. Swage terminals are generally fittings that are mechanically crimped onto the rope end, providing a permanent and robust termination. This technique is common in wire ropes.

The known rope terminals, especially when used with synthetic ropes such as synthetic ropes, aramid ropes, basalt ropes and the like, have the disadvantage that fibres can be damaged by the way the rope is fixed during installation of the rope terminal and during use of the rope. This in turn affects the safety of the application as well as the service life of the rope.

There is therefore a need for a rope terminal with which the rope can be attached to a connector in a particularly non-damaging yet secure manner.

### Summary of the invention

It is the object of the invention to create a rope terminal, in particular for synthetic ropes, pertaining to the technical field initially mentioned, which can reduce damage to rope fibres or strands.

The solution of the invention is specified by the features of claim 1. According to the invention, the rope termination, in particular for a rope with several strands, comprising
a. a mandrel for coaxial insertion into an end section of the rope, whereby a spreading of the end section of the rope can be achieved with the mandrel; and
b. a chuck for inserting the end section of the rope comprising the mandrel, the end section of the rope being frictionally held between the mandrel and the chuck in the assembled state.

An inventive arrangement comprising a rope, in particular a rope with a plurality of strands, and a rope termination, wherein a mandrel is inserted coaxially into an end section of the rope, wherein the end section of the rope is spread with the mandrel; and wherein the end section of the rope comprising the mandrel is received in a chuck, with which the end section of the rope is held in a force-locking manner between the mandrel and the chuck.

Preferably, the rope is a synthetic fibre rope, in particular an aramid rope, or a basalt rope. Although the rope termination also works in principle with other ropes (like natural fiber ropes), its use in combination with synthetic fibre rope, in particular an aramid rope, or a basalt rope is particularly preferred, since the fibres or strands can be held particularly gently with the rope termination according to the invention.

The rope preferably comprises several strands. The number of strands is preferably between 3 and 50, in particular preferably between 7 and 36. However, the number of strands can also be greater than 50. A strand is preferably made up of several fibres. Such rope structures are known to those skilled in the art.

The rope preferably has a diameter of between 2 mm and 150 mm, in particular between 5 mm and 50 mm. However, the rope can also have a smaller diameter than 2 mm or a larger diameter than 150 mm.

The rope also preferably comprises a sheath that protects the strands against abrasion and injury. The cover can, for example, comprise a plastic, in particular a thermoplastic polymer, for example a polyurethane (TPU). The skilled person is also aware of other plastics that can be used to achieve a suitable cover for a rope. In particular, the sheathing can also comprise a composite material, for example a fabric, a plastic mixture, etc. In variants, the cover can also be dispensed with. A sheath can also be provided to protect individual strands or individual fibers of a strand. Such sheaths can be designed in a similar way as the sheaths of a whole rope.

Preferably, the rope and the rope termination are suitable for use in different areas of application, in particular in cranes, logistics such as rack handling, deep sea applications, lifts, construction, climbing, and rescue operations. Other areas of application are known to the skilled person.

In a method for terminating an end section of a rope using a rope termination and an end section of a rope, the end section of the rope is positioned in the chuck and the mandrel is positioned coaxially in the end section of the rope.

When the mandrel is inserted into the rope, the end section of the rope is widened. As a result, the end section of the rope has a larger diameter at right angles to the longitudinal direction of the rope. This in turn increases the surface area of a sheath of the end section of the rope. The increased surface area in turn increases the contact area between the chuck and the end section of the rope. The enlarged contact surface means that the end section of the rope can be held particularly firmly and more gently between the mandrel and the chuck by means of frictional contact.

By widening the diameter of the end section of the rope, a positive connection between the end section of the rope and the chuck can also be achieved (see below).

When assembled, the chuck and the mandrel have a distal end and a rope end opposite the distal end, at which the area of the rope intended to take the load (the long part of the rope) emerges. In the following, the rope end of the chuck (or chuck receptacle, mandrel etc.) is referred to as the side of the chuck from which the rope exits to take up the load.

The chuck is designed in such a way that the end section of the rope can be clamped between the mandrel and the chuck. For this purpose, the chuck preferably has the shape of a sleeve in which the end section of the rope expanded by the mandrel can be accommodated.

the length of the mandrel is preferably between 30% and 100%, preferably between 40% and 80%, particularly preferably between 50% and 70% of the length of the chuck. In variants, the length of the mandrel can also be less than 30% or more than 100% of the length of the chuck.

The rope is preferably designed in such a way that a mandrel can be driven coaxially to the rope into an end section of the rope in order to reshape the previously cylindrical end section of the rope into a hollow cylinder. The strands of the end section of the rope are preferably only rearranged, i.e. the strands are preferably not changed in cross-section area or length, for example. If the rope has a cover, the cover will plastically or elastically deform, i.e. expand, when the mandrel is driven in.

Preferably, the end section of the rope is passed through the chuck; and then the mandrel is inserted coaxially into the end section of the rope, whereby subsequently the end section of the rope is pulled into the chuck together with the mandrel, preferably by pulling on the rope.

This process sequence is particularly favoured, as it allows a chuck to be used that has a closed casing. This means that the chuck can be produced particularly easily and is also stable. As a result, however, the end section of the rope must be passed through the chuck in a first step before the mandrel is driven in. In variants, the chuck can be slotted throughout so that the rope can be inserted laterally into the chuck.

Preferably, after the end section of the rope has been passed through the chuck in the first step, the mandrel is inserted into the end section of the rope coaxially with the rope. For this purpose, the end section of the rope is preferably outside the chuck. This allows the end section of the rope to expand without resistance. Aids can be provided for inserting the mandrel (see below).

On the other hand, the mandrel can only be driven into the end section of the rope once the end section of the rope has been positioned in the chuck. However, there is a risk that the end section of the rope will be compressed in length, making it more difficult to drive in the mandrel.

Preferably, the rope termination further comprises a chuck receptacle in which, in the assembled state, the chuck is received. On the one hand, the chuck can be held and on the other hand, the chuck can also be pressed radially so that the end section of the rope can be held particularly well in the chuck by frictional locking.

The advantage of the chuck receptacle is that the chuck can be designed solely for the purpose of clamping the rope. This simplifies the installation of the rope as well as the replacement of the rope (disassembly).

In variants, the chuck receptacle can also be dispensed with. In this case, the chuck itself can have mounting means for mounting on a connector, with which the rope fixed in the chuck can be mounted.

Preferably, the method for assembling the rope termination comprising a chuck receptacle comprises the following steps, preferably carried out in sequence:
- the end section of the rope is passed through a chuck receptacle; and then
- the end section of the rope is passed through the chuck; and then
- the mandrel is inserted coaxially into the end section of the rope, and then
- preferably by pulling the rope, the end portion of the rope together with the mandrel is pulled into the chuck and the chuck is pulled into the chuck receptacle.

The skilled person is familiar with suitable aids for installing the rope termination. For example, the parts can be inserted into each other using a wheel bearing puller or similar. Depending on the structure of the chuck and/or the chuck receptacle, the sequence of the process steps can also be chosen differently.

A hydraulic device is preferably used to drive the mandrel into the end section of the rope and to drive the chuck into the chuck receptacle. In variants, other techniques known to the skilled person can also be used.

Preferably, the end section of the rope comprising the mandrel is glued with an adhesive, in particular with a two component resin. Therewith, the mandrel can be fixed to the rope and the rope can be fixed to the chock. In principle, the adhesive can comprise any adhesives or mixtures thereof. Preferably, the cured adhesive is a thermoplastic material. This makes it possible to achieve a particularly solid connection between the mandrel and the chock, whereby the connection can be released by applying heat if necessary. This means that the rope termination can also be revised and reused. Alternatively, adhesives can also be provided, which cure to form a thermoset or elastomer, for example. The skilled person is aware that it may be possible to dispense with the adhesive altogether.

Epoxy resins are particularly preferred, especially thermoplastic epoxy resins. These have proven to be particularly user-friendly in processing tests and particularly robust in load tests.

Preferably, the adhesive is pressed into the end section of the rope under pressure. This ensures that the adhesive fills as many cavities as possible. This makes the end section of the rope particularly strong and rigid, resulting in a particularly solid rope termination. The pressure for this is preferably more than 3 bar, in particular more than 10 bar, more preferably more than 20 bar. In variants, the adhesive can also be poured into the end section of the rope without pressure, especially if, for example, the adhesive has a particularly low viscosity or if the penetration of the adhesive is favoured due to capillary forces.

Preferably, the adhesive is applied after the mandrel is positioned inside the end section of the rope. This prevents too much adhesive from escaping from the rope when the end termination is fitted. In particular, a clean installation of the rope termination can be achieved. In variants, the adhesive can also be applied before the mandrel is inserted into the end section of the rope.

It is also preferable that the end section of the rope comprising the mandrel is already fully inserted into the chuck when the adhesive is introduced. This also prevents too much adhesive from escaping from the rope when the end termination is fitted, which means that the rope termination can be fitted particularly neatly. In variants, the adhesive can be introduced before the end section of the rope is positioned in the chuck.

Preferably, the mandrel is glued into the end section of the rope after pulling the end portion of the rope into the chuck and before pulling the chuck fully into the chuck receptacle.

Preferably, before the adhesive is introduced, the chuck with the end section of the rope and the mandrel is partially inserted into the chuck receptacle, preferably between 20% and 80%, in particular between 40% and 60% of the length of the chuck. The adhesive is then introduced, preferably under pressure, into the end section of the rope that comprises the mandrel. The advantage of this procedure is that the complete insertion of the chuck into the chuck receptacle results in compression, which presses the adhesive into every gap in the rope. This achieves optimum bonding of the rope to the mandrel in the chuck. It is particularly preferable to wait after the adhesive has been introduced until the chuck is fully inserted into the chuck receptacle until the adhesive has partially cured and the viscosity of the adhesive has therefore increased. Depending on the adhesive, the waiting time can also be omitted.

In variants, the adhesive can also be introduced before the chuck is inserted into the chuck receptacle or after the chuck has been fully inserted into the chuck receptacle.

The chuck preferably comprises two successive sections, with a first section having a larger diameter than the second section, wherein the second section facing the rope end of the chuck. The first section is preferably designed to accommodate the end section of the cable that surrounds the mandrel and therefore has a larger diameter. A rope section adjoining the end section of the rope is arranged in the second section of the chuck. This ensures that the rope cannot kink immediately after the mandrel and thus be damaged. Further, this area serves as a seal for the adhesive so that no adhesive escapes behind this area when the adhesive is inserted (even under pressure).

The larger diameter preferably corresponds approximately to the diameter of the rope, while the smaller diameter is preferably approximately 5% to 20%, in particular approximately 10% to 15%, smaller than the diameter of the rope. This means that the larger diameter can be 12 mm, for example, and the smaller diameter 11 mm, while the diameter of the rope is 12 mm. Therewith, the rope is compressed in the second section, whereby a sealing plug is formed in the second area by expelling air pockets, which prevents the adhesive from penetrating.

In variants, the diameter relative to the rope can also be selected differently, e.g. outside the range of 5% to 20%. In some embodiments, the larger diameter can be also larger than the diameter of the rope, since the rope end is widened by the mandrel.

The rope end of the chuck preferably comprises an inner area for the rope, especially adjacent to the second section, which widens conically. This allows the rope emerging from the second section in the direction of the rope end of the chuck to expand continuously. The continuous expansion prevents kink bridges in the strands or fibres of the rope. This is particularly advantageous if the rope is compressed in the second section. On the other hand, the cone can also be dispensed with.

Preferably the chuck comprises an outer cone and the chuck receptacle comprises an inner cone corresponding to the outer cone, with which a rope held in the chuck can be held under load. The cone tapers in the direction of the cable end of the chuck or chuck receptacle. This allows the chuck to be pressed together by radial pressure under load in order to increase the clamping effect between the chuck and the chuck receptacle. This stabilises the chuck particularly well. Especially if the chuck has elastic properties, the clamping force between the chuck and the mandrel can therewith increased.

In variants, the conical formations of the chuck and chuck receptacle can also be dispensed with. For example, the chuck receptacle can also have a shoulder that holds the chuck back under load.

The cone angle of the chuck and the chuck receptacle is preferably between 0.5° and 5°, in particular between 1 .5° and 2.5°, particularly preferably around 2°. This achieves a particularly optimal fit between the chuck and the chuck receptacle. In variants, the angle can also be less than 0.5° or greater than 5°.

The cone preferably extends over at least 60%, preferably at least 80%, particularly preferably at least 90% of the length of the chuck. In variants, the cone can also extend over less than 60% of the length of the chuck. Preferably, the cone length in the chuck receptacle extends over a range between 80% and 120% of the length of the cone of the chuck. In variants, the cone length can also be less than 80% or greater than 120% of the length of the chuck cone.

Preferably the chuck is designed as an expanding chuck and, in particular, comprises at least one longitudinal slot, the slot is preferably open on one side. The slots are designed in such a way that the expanding chuck can be expanded or compressed. For this purpose, the slots preferably extend over more than 50%, particularly preferably over more than 75%, more preferably over more than 90% of the total length of the chuck. Preferably, the expanding chuck comprises six slots, which are open alternately in opposite directions of the expanding chuck. This means that the chuck is preferably designed in the form of a collet, whereby the tension is preferably not achieved by a nut, but by a load on the cable. Especially in combination with the conical design of the chuck receptacle and the chuck, a particularly strong frictional connection can be achieved, which becomes even stronger under load.

If an adhesive is used, a particularly effective bonding of the mandrel to the chuck can be achieved. In the first step, the adhesive can be applied to the end section of the rope that comprises the mandrel. In the second step, the chuck can be pressed into the chuck receptacle, whereby the radial compression of the adhesive fills cavities in the rope.

The skilled person is aware that more than six slots (for example 9 slots) or fewer than six slots (for example 3 slots) can also fulfil the desired function.

In variants, the slotted chuck can also be omitted. In this case, the tension can be applied exclusively between the mandrel and the chuck (also by means of a load on the rope). This variant may be favoured in an embodiment that does not include a chuck receptacle.

Preferably, the chuck is made of brass or steel, or a steel alloy. The brass design in particular has the advantage that the rope can be held gently (lower hardness than steel) and has good lubricating properties. This simplifies the assembly and disassembly of the rope termination. Furthermore, brass has a relatively high elasticity, which is another advantage when used for expanding chucks. On the other hand, the use of steel in different alloys has also proven to be advantageous for the present application. In variants, the chuck can also be made of aluminium, a metal alloy, a plastic or a composite material.

The chuck preferably has a surface roughness in the range of Ra 0.35 to 0.45. In variants, the roughness can also lie outside this range.

Preferably, the mandrel has a diameter of between 20% and 80%, particularly preferably between 40% and 60% of the diameter of the rope. Further preferably, the mandrel has a diameter of between 20% and 80%, particularly preferably between 40% and 60% of the inner diameter of the chuck (if the chuck is divided into two sections, the inner diameter of the chuck refers to the inner diameter of the first section). With a rope diameter of 12 mm, for example, the mandrel can have a diameter of around 6 mm.

Preferably, the mandrel has a length corresponding to 2 to 20 times, particularly preferably between 3 and 10 times, especially preferably between 4 and 6 times the diameter of the rope. Further preferably, the mandrel has a length that is 2 to 20 times, particularly preferably between 3 and 10 times, particularly preferably between 4 and 6 times the inner diameter of the chuck (if the chuck is divided into two sections, the inner diameter of the chuck refers to the inner diameter of the first section).

With a rope diameter of 12 mm, for example, the mandrel can have a length of around 60 mm.

Preferably, the mandrel has a longitudinal axis with a longitudinal axis opening, wherein in the assembled state at least one strand of the several strands of the rope can be accommodated in the longitudinal axis opening. The one or more central strands, which are held in the opening, serve as a guide for the mandrel. This can minimise damage to the surrounding strands of the rope. It can also be used to optimise the fixing of the mandrel in the rope, especially if the mandrel is provided with an adhesive further along the rope.

During assembly, one or more central strands of the cable can be exposed in order to guide them through the opening in the mandrel. The mandrel can then be inserted downwards along the strand(s) into the end section of the rope. If necessary, the one or more central strands can be held under tension in order to drive the mandrel in more efficiently.

The diameter of the opening can be adapted to the rope and the number of strands to be accommodated. Preferably, the diameter of the opening corresponds approximately to the diameter of a strand. The diameter is also preferably between 1/20 and 1/4, more preferably between 1/12 and 1/6, in particular between 1/7 and 1/9 of the diameter of the rope. In variants, the diameter can also be less than 1/20 or more than 1/4 of the diameter of the rope.

The expert realises that the opening can also be dispensed with.

Preferably, the mandrel comprises a shaft with a conically tapering tip connected thereto. The conically tapering tip is preferably arranged at the rope end of the mandrel. This makes it easier to insert the mandrel into the end of the rope, as the end face of the mandrel is smaller. The conically tapering tip can also be dispensed with, especially if the wall thickness of the mandrel is already sufficiently small.

The conically tapering tip preferably extends over a proportion of 5% to 50%, preferably over a proportion of 10% to 20% of the length of the mandrel. The proportion can also be less than 5% or greater than 50%.

Preferably, an internal angle of the conically tapering tip is between 2° and 20°, more preferably between 6° and 10°. However, the angle can also be greater than 20° or less than 2°. In a concrete example, the angle can be for example 8°.

Preferably, the mandrel comprises ribs spaced apart in the longitudinal direction and running around the outside. Better traction is achieved with the ribs. This can prevent the rope from slipping on the mandrel. In variants, the ribs can also be dispensed with. The ribs preferably run in a ring around the shaft of the mandrel. In variants, the ribs can also run helically around the shaft of the mandrel. This means that the mandrel could be designed in such a way that it can be screwed into the end section of the rope in the manner of a screw.

The ribs preferably have a radial height relative to the radius of the mandrel of between 5% and 25%, in particular between 10% and 15%. In variants, the radial height of the ribs can also be less than 5% or more than 25% of the radius of the mandrel. With a mandrel diameter of 5.8 mm, for example, the ribs can have a height of 0.4 mm.

The edges of the ribs are preferably rounded so that the lashing of the rope is not damaged. In variants, this can also be omitted.

The width of a rib can be between two and ten times the height of the rib, in particular approximately three to five times. In variants, the widths can also be outside of two to ten times the height of the rib.

The distance between two ribs is preferably between two and ten times the height of the ribs, preferably between four and six times the height of the ribs. In variants, the distance can also be between two and ten times the height of the ribs.

Preferably, the chuck comprises circumferential grooves spaced apart in the longitudinal direction on the inside, the ribs preferably lying in the grooves in the assembled state and thus forming a positive fit. This effectively prevents the rope from slipping between the mandrel and the chuck without subjecting the strands of the rope to greater stress. However, the ribs of the mandrel and the grooves of the chuck do not necessarily have to correspond.

The mandrel is preferably made of a high-strength material. Advantageously, the mandrel comprises an aluminium alloy, in particular AL 7075 T6. In variants, the mandrel can also be made of steel or other metal alloys. Plastics or composite materials are also possible.

Preferably the chuck receptacle comprises a fork head, with which the rope can be fastened to a corresponding fork head receptacle. This creates a tensile force between the chuck and the chuck receptacle under load, tensioning the chuck in the chuck receptacle.

However, the skilled person is aware that other connecting means can also be provided for a connector. Instead of the forkhead, the choch receptacle can also have an external thread via which the rope can be attached to a device. The fork head can also be dispensed with, especially in an embodiment that does not include a chuck receptacle. In such variants, the fork head can also be connected directly to the chuck.

Other advantageous embodiments and combinations of features come out from the detailed description below and the entirety of the claims.

### Brief description of the drawings

The drawings used to explain the embodiments show:
- Fig. 1a: a schematic representation of a side view of a mandrel;
- Fig. 1b: a schematic sectional view along the longitudinal direction of the mandrel according to Figure 1a;
- Fig. 2a: a schematic representation of a side view of a chuck;
- Fig. 2b: a schematic sectional view along the longitudinal direction of the chuck as shown in Figure 2a;
- Fig. 3: a schematic sectional view along the longitudinal direction of the chuck receptacle;
- Fig. 4: a schematic sectional view along the longitudinal direction of the chuck receptacle comprising the chuck;
- Fig. 5: a schematic sectional view along the longitudinal direction of an assembly comprising the chuck receptacle, the chuck and the mandrel, wherein the rope is held between the chuck and the mandrel, in a state before the adhesive is pressed in; and
- Fig. 6: a representation according to Figure 5 after the final assembly of the rope termination.

In the figures, the same components are given the same reference symbols.

### Preferred embodiments

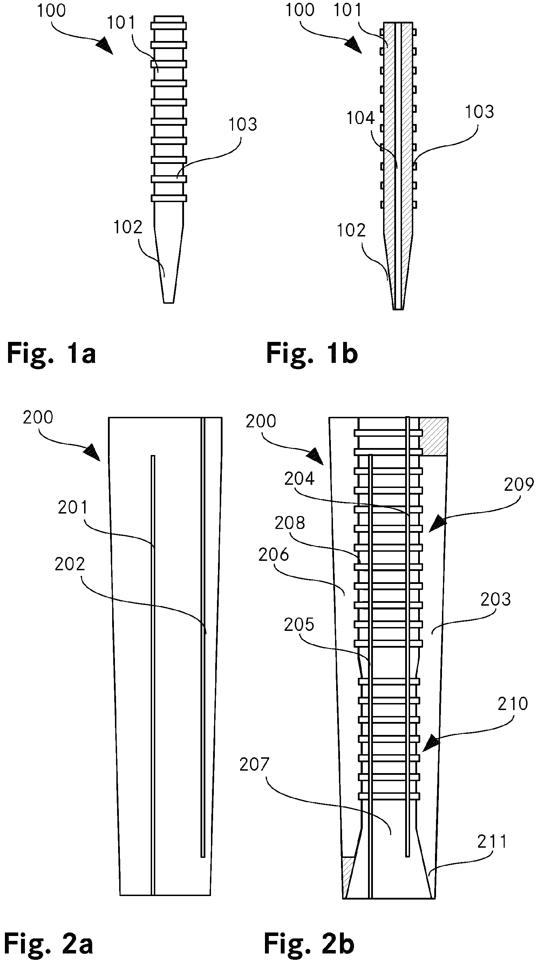

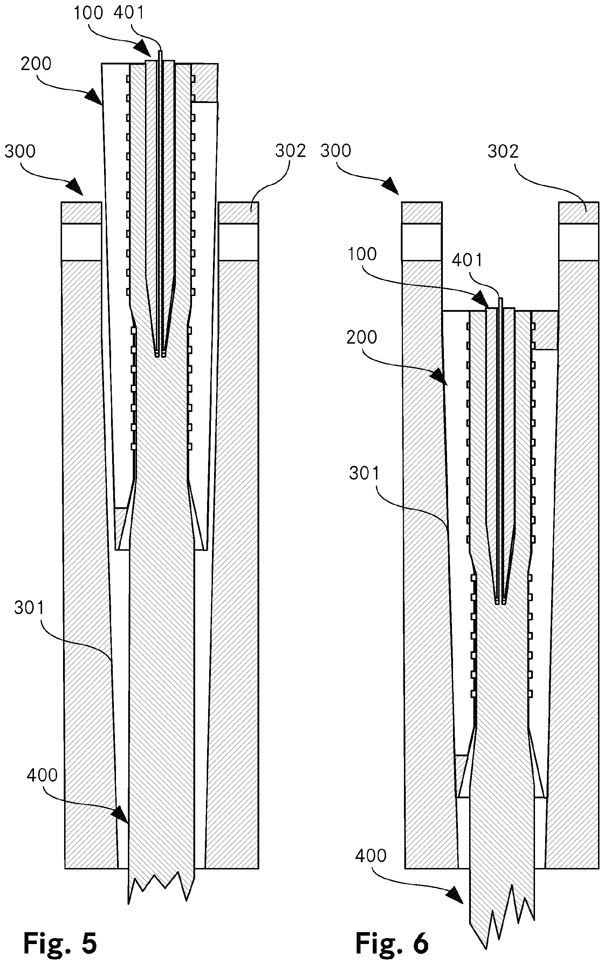

The rope termination comprises a mandrel which is inserted coaxially into the end section of the rope. The rope with the mandrel is inserted into a chuck. The chuck is then picked up in a chuck receptacle. The individual components of the rope termination are described below with reference to figures 1a, 1b, 2a, 2b as well as 3 and 4. the procedure for installing the rope termination is described with reference to figures 5 and 6.

Figure 1a shows a schematic representation of a side view of a mandrel 100. The mandrel 100 is essentially pin-shaped. In the present application, the mandrel has a diameter of 5.8 mm and a length of 61 mm for a rope with a rope diameter of 12 mm. The mandrel 100 comprises a shaft 101 and a tip 102. The tip 102 is acute-angled and has an angle to the horizontal of 172°. The shaft 101 comprises several (in this case ten) ribs 103. The ribs 103 are rounded so that the rope is not damaged (not shown). The ribs 103 are ring-shaped and stand out from the shaft 101 by 0.4 mm. The ribs 103 have a distance of 7 mm to the respective adjacent ribs 103. The mandrel 100 is made of an aluminium alloy, in particular DIN 3.4365 (AL 7075 T6). The mandrel can also be made of steel or the like.

Figure 1b shows a schematic sectional view along the longitudinal direction of the mandrel 100 according to Figure 1a. In this illustration, it can be seen that the mandrel has an opening 104 coaxial to the longitudinal direction. This opening is continuous. The opening 104 has an internal diameter of 1.5 mm. The opening 104 serves to accommodate a strand of the cable. This allows the mandrel 100 to be guided along the strand when it is inserted into the end section of the rope.

Figure 2a shows a schematic representation of a side view of a chuck 200. The chuck 200 has the shape of a sleeve. The outside of the chuck 200 has a cone with a cone angle of 2°. The length of the chuck 200 is 107 mm. The largest outer diameter is 24 mm. The duck also has six slots 201 - 206 along the longitudinal direction of which only the cuttings 201 and 202 are visible in this illustration.. The slots 201 - 206 are each open on one side and have a distance of 6 mm from the opposite end of the chuck 200. The slots 201 - 206 have a cutting width of 1 to 1.5 mm. The slots 201 - 206 are open alternately to one side or the other. This creates an expandable chuck 200. The chuck 200 is made of brass or steel. The surface roughness is Ra 0.4.

Figure 2b shows a schematic sectional view along the longitudinal direction of the chuck 200 as shown in Figure 2a. The chuck 200 has a continuous opening 207 in which the cable can be accommodated with the mandrel 100. The sectional view shows the other cuttings 203 to 206. The cuttings 203 and 206 lie in the sectional plane, the cuttings 204 and 205 lie between them. Circumferential grooves 208 can also be seen in Figure 2b. These are arranged and dimensioned to correspond to the ribs 103 of the mandrel 100.

The opening 207 of the chuck 200 is divided into two sections, a first section 209 and a second section 210. The length of the first section 209 and the second section 210 are both around 50 mm. The two sections 209 and 210 differ in their inner diameter. In the first section 209, the cable is held by the inserted mandrel 100. The rope has a larger diameter in this area due to the mandrel 100. The first section 209 therefore has a larger diameter than the second section 210. The first section 209 has a diameter of 12 mm, the second section 210 has a diameter of 11 mm. The rope also has a diameter of 12 mm in the present case. However, as this is compressible, the end section with the mandrel can still be inserted into the first section 209. The second section 210 joins the first section 209 in the longitudinal direction of the chuck 200 in the direction of the cable end of the chuck 200. The second section 210 is adjoined by an inner cone area 211, in which the inner diameter expands from 12 mm to 14 mm.

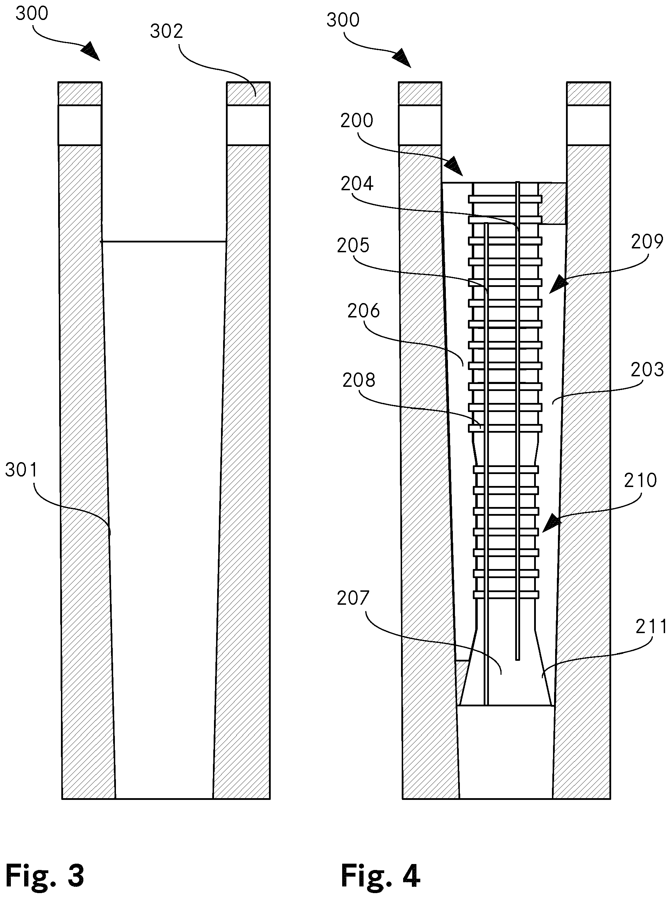

Figure 3 shows a schematic sectional view along the longitudinal direction of the chuck receptacle 300. The chuck receptacle 300 is designed as a hollow body to hold the chuck 200. It has an internal cone 301, which corresponds to the outer cone of the chuck 200 (i.e. it has an angle of 2° and tapers towards the end of the cable of the chuck receptacle 300). Furthermore, the chuck receptacle 300 has a fork head 302 opposite the end of the cable. The fork head 302 comprises two parallel flanges, which have coaxial openings for receiving a screw or a shaft.

Figure 4 shows a schematic sectional view along the longitudinal direction of the chuck receptacle 300 comprising the chuck 200. The outer cone of the chuck 200 fits into the inner cone of the chuck receptacle 300. The chuck 200 is pressed together under load. This allows the rope to be firmly clamped between the chuck 200 and the mandrel 100. The ribs 103 of the mandrel and the grooves 208 of the chuck prevent the rope from slipping during clamping.

Figures 5 and 6 below describe the assembly of the cable termination with a cable 400. The rope 400 is an aramid rope with a diameter of 12 mm.

Figure 5 shows a schematic sectional view along the longitudinal direction of an assembly comprising the chuck receptacle 300, the chuck 200 and the mandrel 100, wherein the rope 400 is held between the chuck 200 and the mandrel 100, in a state before the adhesive is pressed in.

When installing the cable termination, a cable 400 is fed through the chuck 200. A central strand 401 is exposed in the end section of the cable 400. The strand 401 is passed through the opening 104 of the mandrel 100 during the insertion of the mandrel into the end section of the cable 400. The mandrel 100 is thus guided through the central strand 401.

The end section of the rope 400 is then pulled completely into the chuck 200 using the mandrel 100. The rope 400 thus essentially assumes the final position in the chuck 200 and the mandrel 100 also essentially assumes the final position in the rope end of the rope 400.

The rope section of the rope 400 with the mandrel 100 now lies in the first section 209 of the chucks 200, where the inner diameter is 12 mm. As the cable 400 itself has a diameter of 12 mm and a mandrel 100 with a diameter of 5.8 mm is also fitted, the cable section is already compressed and clamped at this point. The rope section in the second section 210 is also compressed, as the inner diameter of the second section 210 is 11 mm. In this area, the compression is sufficient to expel the air pockets from the rope. The second section 210 thus forms a seal.

The chuck 200 with the rope 400 and the mandrel 100 is then inserted approximately halfway into the chuck receptacle 300 before the adhesive is driven in. This already creates a certain resistance that prevents the chuck 200 from expanding when the adhesive is driven in, allowing the adhesive to escape.

The adhesive is then pressed into the rope end between the mandrel 100 and the chuck 200. The adhesive fills all the cavities in the rope in the first section and bonds the rope to the chuck 200 and the mandrel 100. However, the adhesive does not penetrate into the second section 210, or only to an insignificant extent.

The adhesive is now partially cured so that the viscosity of the adhesive increases. when the adhesive is fully cured, the assembly comprising the chuck 200 with the cable 400 and the mandrel 100 is pulled into the chuck receptacle 300. This presses the chuck 200 together in the chuck receptacle 300, allowing the glue to penetrate further into the pores and cavities of the rope. This results in a particularly optimised bond between the rope 400, the mandrel 100 and the chuck 200.

Figure 6 shows a representation according to Figure 5 in the final assembly of the rope termination. Once the adhesive has cured, the chuck receptacle can be attached to a device such as a crane via the fork head and a load can be applied to the cable 400. The load further increases the radial force in the cone between the chuck 200 and the chuck receptacle, allowing the rope to be held particularly firmly in the rope end.

In summary, it is to be noted that according to the invention, a rope termination is created which is particularly gentle on the rope, especially on synthetic ropes.

## Claims

1. Rope termination, in particular for a rope (400) with several strands, comprising
a. a mandrel (100) for coaxial insertion into an end section of the rope (400), whereby a spreading of the end section of the rope (400) can be achieved with the mandrel (100); and
b. a chuck (200) for inserting the end section of the rope (400) comprising the mandrel (100), the end section of the rope (400) being frictionally held between the mandrel (100) and the chuck (200) in the assembled state.

2. Rope termination according to claim 1, **characterised in that** the rope termination further comprises a chuck receptacle (300) in which, in the assembled state, the chuck (200) is received.

3. Rope termination according to claim 2, **characterised in that** the chuck (200) comprises an outer cone (211) and the chuck receptacle (300) comprises an inner cone (301) corresponding to the outer cone (211), with which a rope (400) held in the chuck (200) can be held under load.

4. Rope termination according to one of claims 1 to 3, **characterised in that** the chuck (200) is designed as an expanding chuck and, in particular, comprises at least one longitudinal slot (201 - 206), the slot (201 - 206) is preferably open on one side.

5. Rope termination according to one of claims 1 to 4, **characterised in that** the chuck receptacle (300) comprises a fork head (302), with which the rope (400) can be fastened to a corresponding fork head receptacle.

6. Rope termination according to one of claims 1 to 5, **characterised in that** the mandrel (100) has a longitudinal axis with a longitudinal axis opening, wherein in the assembled state at least one strand (401) of the several strands of the rope (400) can be accommodated in the longitudinal axis opening.

7. Rope termination according to one of claims 1 to 6, **characterised in that** the mandrel (100) comprises a shaft with a conically tapering tip (102) connected thereto.

8. Rope termination according to one of claims 1 to 7, **characterised in that** the mandrel (100) comprises ribs (103) spaced apart in the longitudinal direction and running around the outside.

9. Rope termination according to claim 8, **characterised in that** the chuck (200) comprises circumferential grooves (208) spaced apart in the longitudinal direction on the inside, the ribs (103) preferably lying in the grooves (208) in the assembled state and thus forming a positive fit.

10. Arrangement comprising a rope (400), in particular a rope (400) with a plurality of strands, and a rope termination according to one of claims 1 to 9, wherein a mandrel (100) is inserted coaxially into an end section of the rope (400), wherein the end section of the rope (400) is spread with the mandrel (100); and wherein the end section of the rope (400) comprising the mandrel (100) is received in a chuck (200), with which the end section of the rope (400) is held in a force-locking manner between the mandrel (100) and the chuck (200).

11. Arrangement according to claim 10, **characterised in that** the rope (400) is a synthetic fibre rope, in particular an aramid rope, or a basalt rope.

12. Arrangement according to claim 10 or 11, **characterised in that** the end section of the rope (400) comprising the mandrel (100) is glued with an adhesive, in particular with a two component resin.

13. Method for terminating an end section of a rope (400) using a rope termination according to one of claims 1 to 9 and an end section of a rope (400), **characterised in that** the end section of the rope (400) is positioned in the chuck (200) and the mandrel (100) is positioned coaxially in the end section of the rope (400).

14. Method according to claim 12, **characterised in that**
- the end section of the rope (400) is passed through the chuck (200); and then
- the mandrel (100) is inserted coaxially into the end section of the rope (400), whereby subsequently
- the end section of the rope (400) is pulled into the chuck (200) together with the mandrel (100) by pulling on the rope (400).

15. Method according to claim 12 or 13, **characterised in that** successively
- the end section of the rope (400) is passed through a chuck receptacle (300); and then
- the end section of the rope (400) is passed through the chuck (200); and then
- the mandrel (100) is inserted coaxially into the end section of the rope (400), and then
- by pulling the rope (400), the end portion of the rope (400) together with the mandrel (100) is pulled into the chuck (200) and the chuck (200) is pulled into the chuck receptacle (300).

16. Method according to one of claims 12 to 14, **characterised in that** the mandrel (100) is glued into the end section of the rope (400), in particular with a two component resin.

17. Method according to claim 16, **characterised in that** the mandrel (100) is glued into the end section of the rope (400) after pulling the end portion of the rope (400) into the chuck (200) and before pulling the chuck (200) fully into the chuck receptacle (300).
